# EUROPÄISCHE PATENTSCHRIFT

(11) **EP 0 540 862 B1**
(45) Veröffentlichungstag und Bekanntmachung des Hinweises auf die Patenterteilung: **10.07.1996**
(21) Anmeldenummer: 92115709.5
(22) Anmeldetag: 14.09.1992
(51) Int. Cl.: H04R 25/02, C08J 7/04, B01D 71/36, B01D 67/00

(54) **Kappe zum Verschliessen von Öffnungen an Ohrpassstücken**
Cap for sealing openings of ear fitments
Capuchon d'obturation pour les ouvertures d'embouts auriculaires

(30) Priorität: 08.11.1991 DE 9113936 U
(43) Veröffentlichungstag der Anmeldung: 12.05.1993
(73) Patentinhaber: W.L. Gore & Associates GmbH, D-85636 Putzbrunn (DE)
(72) Erfinder: Wiemer, Thorsten, W-8090 Wasserburg (DE)
(74) Vertreter: Klunker . Schmitt-Nilson . Hirsch

(56) Entgegenhaltungen:
- EP-A- 0 159 571
- EP-A- 0 193 370
- EP-A- 0 310 866
- WO-A-91/01791
- DE-U- 9 113 936
- DATABASE WPIL Section Ch, Week 8515, Derwent Publications Ltd., London, GB; Class A94, AN 85-090134

## Beschreibung

Die Erfindung betrifft eine Kappe zum Verschließen von Öffnungen an Ohrpaßstücken für Im-Ohr-Hörgeräte mit wenigstens einer Öffnung, die von einer mikroporösen Membran aus Polytetrafluorethylen abgedeckt ist.

Durch die europäische Patentanmeldung 0 310 866 ist bereits eine gattungsgemäße Kappe bekannt, die das Eindringen von Feuchtigkeit und Ohrenschmalz (Cerumen) vom Ohrkanal in das Innere des Hörgeräts verhindern soll. Man hat jedoch festgestellt, daß die flüssige Form des Cerumens in die mikroporöse Membran eindringt und dort aushärtet, wodurch die Schalldurchlässigkeit nur noch bedingt gewährleistet oder gar nicht mehr gegeben ist. Eine Abreinigung mit reinem Wasser, auch im Ultraschallbad, ist wenig erfolgreich. Die Verwendung von Spülmitteln verbietet sich, da diese zwar das Cerumen auflösen, die Poren aber verstopfen oder gar in das Innere des Hörgeräts vordringen und dort die elektronischen Bauteile beschädigen.

Der Erfindung liegt die Aufgabe zugrunde, die bekannten Lochkappen bzw. das in diesem Zusammenhang verwendete Membranmaterial derart weiterzubilden, daß es bei gleicher Schalldurchlässigkeit besser und wirksamer abreinigbar ist. Das Abreinigen soll dabei vorzugsweise bei montierter Kappe erfolgen, d. h. das Reinigungsbad darf die Membran nicht durchdringen.

Erfindungsgemäß wird die Aufgabe dadurch gelöst, daß das Membranmaterial mit einem Copolymer beschichtet ist, das der Membran einen oleophoben Charakter verleiht.

Das Copolymer ist vorzugsweise ein amorphes Copolymer aus Tetrafluorethylen und Perfluor-2,2-dimethyl-1,3-dioxol. Gemäß einer Weiterbildung der Erfindung besteht das Copolymer aus 10 bis 40 Molprozent Tetrafluorethylen und 90 bis 60 Molprozent Perfluor-2,2-dimethyl-1,3-dioxol.

Um auch eine mechanische Abreinigung der empfindlichen Membran zu ermöglichen, kann die Membran vorzugsweise auch als Laminat eingesetzt werden, das eine Trägerschicht mit einer Netz- oder Siebstruktur aufweist. Material und Maschenweite der Trägerschicht müssen so ausgewählt werden, daß einerseits die gewünschte mechanische Verstärkung erzielt wird, daß aber andererseits die Schalldurchtrittseigenschaften nur minimal beeinflußt werden.

Das zur Beschichtung verwendete Copolymer ist im Handel unter dem Namen Teflon AF1600 von der Firma Dupont erhältlich. Es wird vorzugsweise in Form einer verdünnten Lösung aufgetragen. Das Lösungsmittel ist Perfluor-(2-butyltetahydrofuran). Die Konzentration des Copolymers in der Lösung beträgt vorzugsweise 0,01 bis 5 Gew.-%. Die Lösung kann beispielsweise auf die Membran aufgesprüht werden, die Membran kann aber auch in die Lösung eingetaucht werden.

Die Zugabe weiterer Komponenten in niedriger Dosierung, wie beispielsweise UV-Stabilisiermittel, Farbstoffe, Weichmacher und dergleichen verändern den Charakter und die Wirkung des Copolymers nicht.

Die derart behandelte Membran aus mikroporösem Polytetrafluorethylen ist stark oleophob, d. h. sie verhindert weitgehend ein Eindringen des flüssigen Cerumens in das Membranmaterial. Auftretende Verschmutzungen bleiben vielmehr an der Oberfläche der Membran haften und können daher in einem Ultraschallbad unschwer abgereinigt werden. Auch der Einsatz von Spülmitteln ist möglich, da die Beschichtung ein Eindringen der Moleküle des Wirkungsmittels bzw. Spülmittels in die Membran oder gar durch die Membran hindurch verhindert.

In Sonderfällen kann es vorkommen, daß sich Cerumen im Raum zwischen einem über dem Gehäuse des Hörgeräts angeordneten Schutzgitter und der Membran so festsetzt, daß es durch eine Ultraschallbehandlung und gegebenenfalls Spül- oder Lösungsmitteln nicht abgelöst werden kann. In einem solchen Fall ist eine mechanische Reinigung wünschenswert. Soll die Membran auch mechanisch abgereinigt werden, muß sie mit einer Trägerschicht mit einer Netz- oder Siebstruktur verstärkt werden. Vorteilhafterweise wird die Trägerschicht und die beschichtete Membran in Form eines Laminats eingesetzt. Die Trägerschicht muß so ausgewählt werden, daß sie zwar ihre Stützfunktion erfüllt, den durchtretenden Schall aber möglichst wenig dämpft.

Nachfolgend ist eine Ausführungsform der Erfindung anhand der beigefügten Zeichnung beispielsweise beschrieben. Darin zeigen:
- Fig. 1: ein Im-Ohr-Hörgerät in schematischer Darstellung und
- Fig. 2: ein Querschnitt durch eine Verschlußkappe.

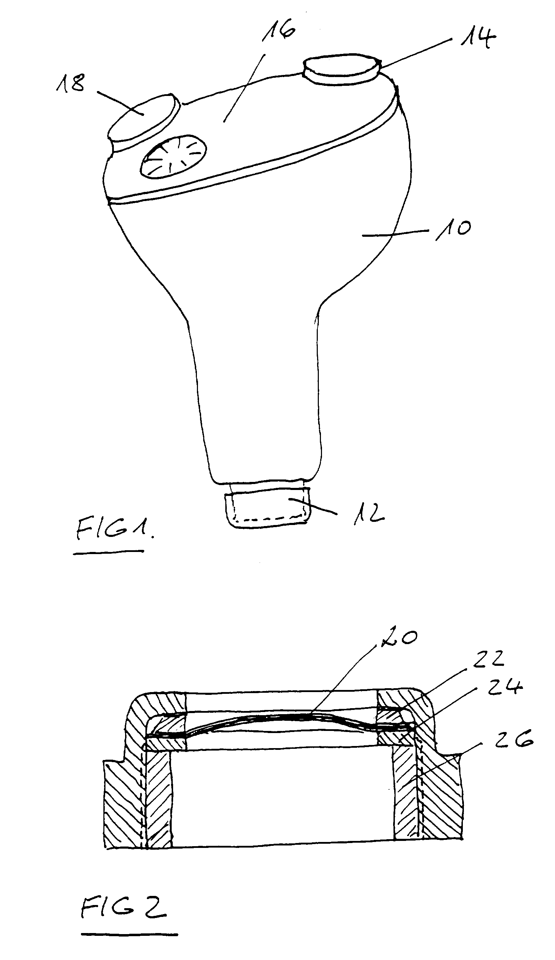

Das Im-Ohr-Hörgerät gemäß Fig. 1 besteht aus einem Gehäuse 10 mit einem Schallausgangsstutzen 12 und einem Schalleingangsstutzen 14. Auf der Stirnfläche 16 des Geräts befinden sich diverse Drehknöpfe 18 für die Einstellung der Lautstärke und zur Justierung der im Inneren des Geräts angeordneten Bauelemente, wie Mikrophon, Verstärkerelektronik etc. Schalleintritts- und Schallaustrittsstutzen 12, 14 sind jeweils mit einer Kappe verschlossen. Ein Querschnitt durch eine solche Kappe ist in Fig. 2 gezeigt. Die mikroporöse Membran 20 ist zwischen zwei Montageringen 22 und 24 eingeklemmt. Die Montageringe werden durch einen in das Innengewinde der Kappe eingeschraubten Befestigungsring 26 an Ort und Stelle gehalten.

Die Kappe kann natürlich auch anders aufgebaut sein, statt dem Innengewinde können entsprechende Schnapp- oder Rastverbindungen vorgesehen sein. Auch ein Einschweißen oder Einkleben ist möglich. Entscheidend ist lediglich, daß die Membran 20 sicher und wasserdicht montiert ist. Die Schalldurchtrittsöffnung der Kappe kann zum Schutz der Membran gegen mechanische Belastungen von einem Schutzgitter (nicht gezeigt) abgedeckt sein.

Eine entsprechend sichere Montage der Membran vorausgesetzt, ist es nicht erforderlich, zur Reinigung die Schutzkappen vom Gerät 10 abzuschrauben, das Ohrpaßstück kann vielmehr teilweise bzw. insgesamt in das Ultraschallbad zur Reinigung eingetaucht werden.

## Patentansprüche

1. Kappe zum Verschließen von Öffnungen (12, 14) an Ohrpaßstücken (10) für ImOhr-Hörgeräte mit wenigstens einer Öffnung (12, 14), die von einer mikroporösen Membran (20) aus Polytetrafluorethylen abgedeckt ist,
**dadurch gekennzeichnet,**
daß die Membran (20) mit einem Copolymer beschichtet ist, das der Membran einen oleophoben Charakter verleiht.

2. Kappe nach Anspruch 1,
dadurch gekennzeichnet,
daß das Copolymer ein amorphes Copolymer aus Tetrafluorethylen und Perfluor-2,2-dimethyl-1,3-dioxol ist.

3. Kappe nach Anspruch 2,
dadurch gekennzeichnet,
daß das Copolymer aus 10 bis 40 Molprozent Tetrafluorethylen und 90 und 60 Molprozent Perfluor-2,2-dimethyl-1,3-dioxol besteht.

4. Kappe nach wenigstens einem der Ansprüche 1 bis 3,
dadurch gekennzeichnet,
daß die beschichtete Membran auf eine Trägerschicht mit einer Netz- oder Siebstruktur auflaminiert ist, die den Schalldurchtritt möglichst wenig dämpft.

## Claims

1. A cap for sealing openings (12, 14) in ear fitting pieces (10) for intra-ear hearing aids with at least one opening (12, 14) covered by a microporous membrane (20) of polytetrafluoroethylene, characterized in that the membrane (20) is coated with a copolymer which gives the membrane an oleophobic character.

2. The cap of claim 1, characterized in that the copolymer is an amorphous copolymer of tetrafluoroethylene and perfluoro-2,2-dimethyl-1,3-dioxol.

3. The cap of claim 2, characterized in that the copolymer consists of 10 to 40 mol percent tetrafluoroethylene and 90 and 60 mol percent perfluoro-2,2-dimethyl-1,3-dioxol.

4. The cap of at least one of claims 1 to 3, characterized in that the coated membrane is laminated on a carrier layer with a net or sieve structure which dampens the sound transmission as little as possible.

## Revendications

1. Capuchon destiné à fermer des ouvertures (12, 14) sur des embouts auriculaires (10) pour des appareils de correction auditive infra-auriculaires, présentant au moins une ouverture (12, 14) qui est recouverte par une membrane microporeuse (20) constituée en polytétrafluoroéthylène, caractérisé en ce que la membrane (20) est revêtue d'un copolymère qui confère à la membrane une caractéristique oléophobe.

2. Capuchon selon la revendication 1, caractérisé en ce que le copolymère est un copolymère amorphe en tétrafluoroéthylène et en perfluoro-2,2-diméthyl-1,3-dioxol.

3. Capuchon selon la revendication 2, caractérisé en ce que le copolymère est constitué de 10 à 40 % en tétrafluoroéthylène et de 90 à 60 % en perfluoro-2,2-diméthyl-1,3-dioxol (pourcentages molaires).

4. Capuchon selon l'une quelconque au moins des revendications 1 à 3, , caractérisé en ce que la membrane revêtue est laminée sur une couche de support à structure en filet ou en tamis qui amortit le moins possible le passage du son.
